# EUROPÄISCHE PATENTSCHRIFT

(11) **EP 2 353 970 B1**
(45) Veröffentlichungstag und Bekanntmachung des Hinweises auf die Patenterteilung: **13.03.2013**
(21) Anmeldenummer: 11450018.4
(22) Anmeldetag: 03.02.2011
(51) Int. Cl.: B62D 13/00, B62D 13/02, B60D 1/58, B60D 1/06, B60D 1/173

(54) **Zwangslenkung**
Forced steering
Guidage forcé

(30) Priorität: 03.02.2010 AT 1472010
(43) Veröffentlichungstag der Anmeldung: 10.08.2011
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte OG

(56) Entgegenhaltungen:
- EP-A1- 0 390 288
- EP-A1- 1 593 552
- EP-A1- 2 025 536
- EP-A2- 1 081 020
- US-A1- 2004 124 605
- US-A1- 2006 071 448

## Beschreibung

Die Erfindung betrifft eine Zwangslenkung mit einer Messeinrichtung gemäß dem Oberbegriff des Patentanspruches 1.

Mit der Messeinrichtung wird der Schwenkwinkel zwischen dem Zugfahrzeug, insbesondere dem Traktor, und dem Fahrzeuganhänger ermittelt. Der Schwenkwinkel ist bei Geradeausfahrt 0° und bei Kurvenfahrt - dem Lenkeinschlag entsprechend - kleiner null oder größer null. Im Fahrbetrieb des durch das Zugfahrzeug und den Fahrzeuganhänger ausgebildeten Zuggespanns wird ein dem ermittelten Schwenkwinkel entsprechendes Messsignal von der Messeinrichtung an einen Eingang einer Steuereinrichtung übergeben. In der Steuereinrichtung wird ein von diesem Messsignal abhängiges Steuersignal generiert und das Steuersignal einer Lenkeinrichtung zur Verdrehung der Räder zumindest einer gelenkten Achse des Fahrzeuganhängers übergeben. Die derart gelenkten Räder sind mittels der Zwangslenkung zwangsgelenkt, wobei beim Fahrzeuganhänger mit der Zwangslenkung zumindest die Räder der gelenkten Achse des Fahrzeuganhängers zwangsgelenkt werden.

Aus der EP 1 081 020 A2 ist eine Lenkvorrichtung für landwirtschaftliche Anhänger bekannt, bei der der Winkel einer Knickdeichsel mit einem Aktuator verändert werden kann.

Aus der US 2006/071448 A1 ist eine Kupplungseinrichtung zur Messung des Lenkwinkels und eines Kippwinkel bekannt.

Die EP 0 390 288 A1 betrifft eine Zwangslenkung eines Anhängers, wobei die Zwangslenkung von dem Lenkwinkel des Zugfahrzeuges abhängt.

Die EP 2 025 536 A1 offenbart einen Anhänger mit einer Deichsel und einem Winkelsensor

Die EP 1 593 552 A1 zeigt die Überwachung eines PKW-Anhängers mit einer Rückfahrkamera.

Die US 2004/124605 A1 zeigt eine Lenkvorrichtung für landwirtschaftliche Anhänger, bei der der Anhängepunkt verschwenkt werden kann.

Aufgabe der Erfindung ist es, die Genauigkeit und Zuverlässigkeit der Zwangslenkung zu erhöhen.

Erfindungsgemäß wird dies durch die Merkmale des Patentanspruches 1 erreicht. Dadurch ergibt sich der Vorteil, dass zusätzlich zum Schwenkwinkel auch die Verwindung zwischen dem Zugfahrzeug und dem Fahrzeuganhänger ermittelbar ist, welche Verwindung im Wesentlichen um die Längsachse des Zuggespanns auftritt, wenn das Zuggespann auf einer verwundenen und somit unebenen Fläche angeordnet ist. Vorteilhaft dabei ist, dass das im Fahrbetrieb von der Messeinrichtung an den Eingang der Steuereinrichtung übergebene Messsignal somit dem ermittelten Schwenkwinkel und der ermittelten Verwindung entspricht. Somit kann die Steuereinrichtung, welche eingangseitig das Messsignal empfängt, bei der Generierung des Steuersignals sowohl den Schwenkwinkel als auch die Verwindung berücksichtigen, womit die Genauigkeit und Zuverlässigkeit der Zwangslenkung erhöht werden kann.

Die Erfindung betrifft weiters ein Verfahren zum Zwangslenken eines an ein Zugfahrzeug gekuppelten Fahrzeuganhängers gemäß dem Oberbegriff des Patentanspruches 9.

Aufgabe des Verfahrens ist es, die Genauigkeit und Zuverlässigkeit des Zwangslenkens zu erhöhen.

Erfindungsgemäß wird dies durch die Merkmale des Patentanspruches 9 erreicht. Auch das Verfahren ermöglicht in vorteilhafter Weise die vorstehend genannten Vorteile und vorteilhaften Wirkungen.

Die Unteransprüche, welche ebenso wie die Patentansprüche 1 und 9 gleichzeitig einen Teil der Beschreibung bilden, betreffen weitere vorteilhafte Ausgestaltungen der Erfindung.

Insbesondere kann zur Ausbildung eines redundanten Systems vorgesehen sein, dass zusätzlich zur Messeinrichtung eine weitere Messeinrichtung angeordnet ist.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 einen Teil der Zwangslenkung einer besonders bevorzugten ersten Ausführungsform in Seitenansicht;
Fig. 2 den Teil der Zwangslenkung der Fig. 1 in Aufsicht;
Fig. 3 den Teil der Zwangslenkung der Fig. 1 in Frontsicht;
Fig. 4 den Teil der Zwangslenkung der Fig. 1 in Schrägansicht;
Fig. 5 einen Teil der Zwangslenkung einer vorteilhaften zweiten Ausführungsform in Seitenansicht;
Fig. 6 einen Teil der Zwangslenkung einer vorteilhaften dritten Ausführungsform in Aufsicht;
Fig. 7 einen Teil der Zwangslenkung der vorteilhaften dritten Ausführungsform und einen weiteren Fahrzeuganhängerteil in Schrägansicht;
Fig. 8 schematisch eine Ermittlung der Anordnung zweier Achsen relativ zueinander im dreidimensionalen Raum, welche zwei Achsen einander in einem Punkt schneiden; und
Fig. 9 einen Teil der Zwangslenkung einer vorteilhaften vierten Ausführungsform in Schrägansicht, wobei Last-Kupplungskugel und Last-Kupplungspfanne sowie Zwangslenkungs-Kupplungskugel und Zwangslenkungs-Kupplungspfanne in Explosionsdarstellung dargestellt sind;

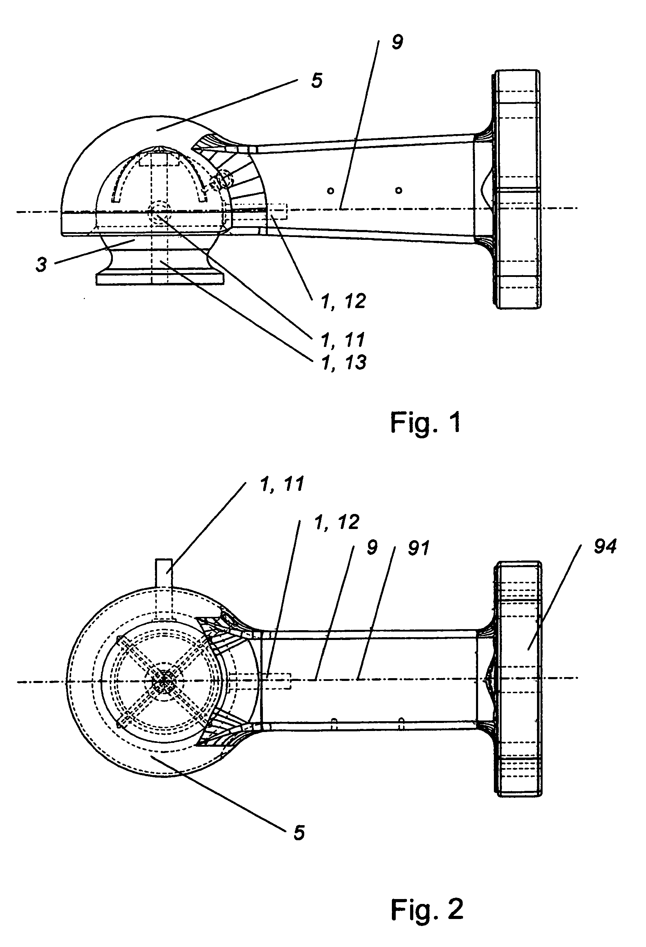

Die Fig. 1 bis 7 und 9 zeigen Teile vorteilhafter Ausführungsformen einer Zwangslenkung für die Lenkung eines an ein Zugfahrzeug gekuppelten Fahrzeuganhängers mit einer Messeinrichtung 1 zur Ermittlung des Schwenkwinkels zwischen dem Zugfahrzeug und dem Fahrzeuganhänger, einer eingangseitig mit der Messeinrichtung 1 verbundenen Steuereinrichtung und einer ausgangsseitig mit der Steuereinrichtung verbundenen Lenkeinrichtung zur Verdrehung der Räder zumindest einer gelenkten Achse des Fahrzeuganhängers. Zur Erhöhung der Genauigkeit und der Zuverlässigkeit der Zwangslenkung, insbesondere auf unebenem Gelände, wird vorgeschlagen, dass die Messeinrichtung 1 weiters zur Ermittlung der Verwindung zwischen dem Zugfahrzeug und dem Fahrzeuganhänger ausgebildet ist.

Diese Zwangslenkung ermöglicht in vorteilhafter Weise ein Verfahren zum Zwangslenken des an ein Zugfahrzeug gekuppelten Fahrzeuganhängers, wobei mit der Messeinrichtung 1 der Schwenkwinkel zwischen dem Zugfahrzeug und dem Fahrzeuganhänger ermittelt wird, das Messsignal von der Messeinrichtung an einen Eingang einer Steuereinrichtung übergeben wird, in der Steuereinrichtung ein Steuersignal generiert wird und das Steuersignal einer Lenkeinrichtung zur Verdrehung der Räder zumindest einer Achse des Fahrzeuganhängers übergeben wird. Bei dem Verfahren ist in vorteilhafter Weise vorgesehen, dass mit der Messeinrichtung 1 weiters die Verwindung zwischen dem Zugfahrzeug und dem Fahrzeuganhänger ermittelt wird.

Das Zugfahrzeug und der Fahrzeuganhänger bilden im gekuppelten Zustand ein Zuggespann. Das Zugfahrzeug kann insbesondere ein Traktor oder eine Sattelzugmaschine sein.

Die Zwangslenkung kann in einer Ausbildung der Zwangslenkung ein hydraulisches System mit wenigstens einem Geberzylinder und mit wenigstens einem Nehmerzylinder umfassen. Der Geberzylinder ist hier zur Ansteuerung der Stellung des Nehmerzylinders vorgesehen und der Nehmerzylinder ist hier vorgesehen, die Verdrehung der Räder der gelenkten Achse zu bewirken. Der Nehmerzylinder kann insbesondere von der Steuereinrichtung umfasst sein. Der Geberzylinder kann insbesondere von der Lenkeinrichtung umfasst sein.

Die Zwangslenkung kann in einer anderen Ausbildung der Zwangslenkung ein elektrisches System mit einem wenigstens einen Stellmotor umfassen. Der Stellmotor ist hier vorgesehen, die Verdrehung der Räder der gelenkten Achse zu bewirken, wobei der Stellmotor von der Lenkeinrichtung umfasst ist.

Der Schwenkwinkel ist bei Geradeausfahrt 0° und bei Kurvenfahrt - dem Lenkeinschlag entsprechend - kleiner null, bei der Kurvenfahrt nach links, oder größer null, bei der Kurvenfahrt nach rechts. Der Schwenkwinkel wird gemessen zwischen einer Längsachse des Zugfahrzeuges und einer Messachse 9 der Zwangslenkung. Die Messachse 9 kann insbesondere parallel zur Längsachse einer Zugstange 91 und/oder parallel zu einer Lenkstange 92 der Zwangslenkung sein. Wenn die Zugstange 91 verschwenkfest mit einem Fahrzeuganhängerrahmen verbunden ist, kann die Messachse 9 der Zwangslenkung parallel zur Längsachse des Fahrzeuganhängers sein. Wenn die Messachse 9 der Zwangslenkung parallel zur horizontalen Ebene ist, dann wird der Schwenkwinkel in einer horizontalen Ebene ermittelt. Diese Anordnung der Messachse 9 kann insbesondere vorliegen, wenn sich das Zuggespann auf einer horizontalen Ebene angeordnet ist.

Die Verwindung ist die Verdrehung der Messachse 9 um sich selbst. Dies kann dem Kippen des Fahrzeuganhängers um die Längsachse des Fahrzeuganhängers gegenüber dem Zugfahrzeug entsprechen, welches insbesondere der Fall sein kann, wenn das Zuggespann auf einer verwundenen Fläche eines unebenen Geländes angeordnet ist.

Bei der dreidimensionalen Anordnung der Messachse 9 gegenüber der Längsachse des Zugfahrzeuges kann weiters ein Kippwinkel auftreten, welcher Kippwinkel normal zum Schwenkwinkel steht. Der Kippwinkel zwischen dem Zugfahrzeug und dem Fahrzeuganhänger ist ungleich 0°, wenn das Zuggespann über eine kuppenförmig unebene Fläche, insbesondere über eine Kuppe, oder durch eine wannenförmig unebene Fläche, insbesondere durch eine Vertiefung, fährt, wobei der Kippwinkel in einem der beiden Fälle kleiner 0° und im anderen der beiden Fälle größer 0° ist. In vorteilhafter Weiterbildung der Zwangslenkung kann vorgesehen sein, dass die Messeinrichtung 1 weiters zur Ermittlung des Kippwinkels zwischen dem Zugfahrzeug und dem Fahrzeuganhänger ausgebildet ist.

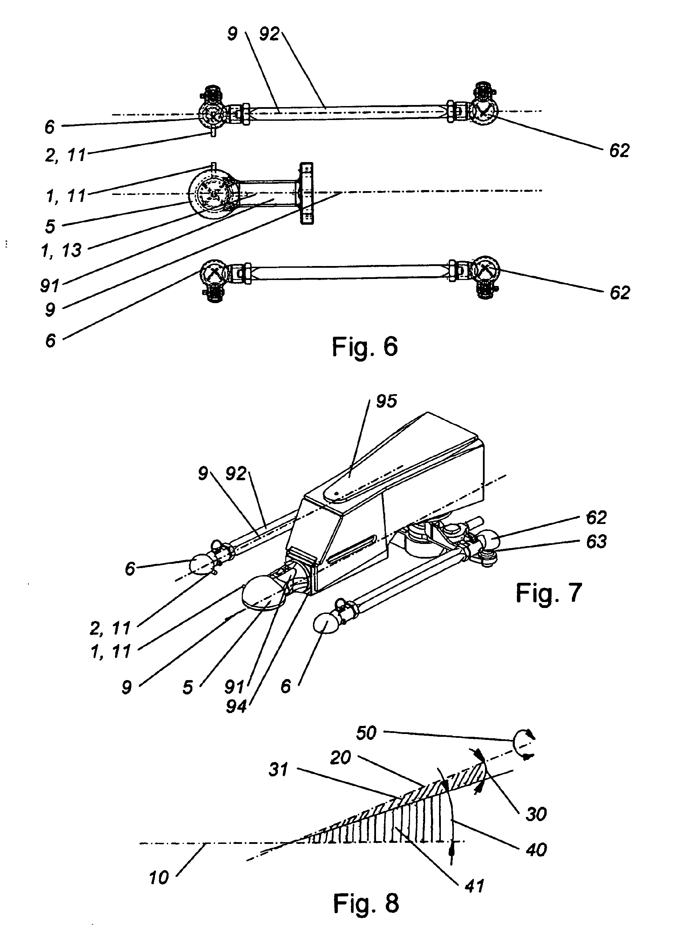

Der Kippwinkel, der Schwenkwinkel und die Verwindung legen somit die Anordnung und die Verdrehung der Messachse 9 gegenüber der Längsachse des Zugfahrzeuges in den drei Raumdimensionen fest, wie dies schematisch in Fig. 8 anhand einer ersten Achse 10 und einer zweiten Achse 20 dargestellt ist:
Fig. 8 zeigt die erste Achse 10 und die zweite Achse 20, welche einander in einem Punkt schneiden und welche - schematisch - im dreidimensionalen Raum angeordnet sind. Die erste Achse 10 kann insbesondere der Längsachse des Zugfahrzeuges entsprechen und die zweite Achse 20 kann insbesondere der Messachse 9 der Zwangslenkung entsprechen. Bei der allgemeinen Anordnung der ersten und der zweiten Achse 10, 20 sind zwischen den beiden Achsen 10, 20 ein, dem Kippwinkel entsprechender, erster Winkel 30 in einer vertikalen Ebene 31, ein, dem Schwenkwinkel entsprechender, zweiter Winkel 40 in einer verkippten Ebene 41 und ein, der Verwindung entsprechender, dritter Winkel 50 der Verdrehung der zweiten Achse 20 um sich selbst ausgebildet. Durch die Ermittelung des ersten Winkels 30, des zweiten Winkels 40 und des dritten Winkels 50 sind die Ausrichtung und die Drehung der zweiten Achse 20 relativ zur ersten Achse 10 eindeutig bestimmt. Dementsprechend sind bei Ermittelung des Schwenkwinkels, des Kippwinkels und der Verwindung die Ausrichtung und die Drehung der Messachse 9 relativ zur Längsachse des Zugfahrzeuges eindeutig bestimmt. Vorteilhaft dabei ist, dass das Steuersignal mit besonderer Zuverlässigkeit und mit besonderer Genauigkeit generiert werden kann und derart die Genauigkeit und die Zuverlässigkeit der Zwangslenkung besonders hoch ist.

Wie aus Fig. 7 und 8 hervorgeht wird der Schwenkwinkel gemessen in einer der verkippten Ebene 41 entsprechenden Kippebene, welche Kippebene insbesondere durch die Längsachse der Zugstange 91 und der Längsachse der Lenkstange 92 aufgespannt sein kann. Der Kippwinkel zwischen der Längsachse des Zugfahrzeuges und der Kippebene beeinflusst den ermittelten Schwenkwinkel. Indem mittels der Messeinrichtung 1 weiters der Kippwinkel zwischen dem Zugfahrzeug und dem Fahrzeuganhänger ermittelt wird, kann dieser Einfluss des Kippwinkels bei der Generierung des Steuersignals berücksichtigt werden, womit die Zwangslenkung besonders genau erfolgen und besonders zuverlässig kann.

Insbesondere kann das Messsignal der Messeinrichtung 1 zwei voneinander unabhängige Signale, ein lediglich vom Schwenkwinkel abhängiges Schwenkwinkel-Messsignal und ein lediglich von der Verwindung abhängiges Verwindungs-Messsignal, umfassen.

Insbesondere kann das Messsignal der Messeinrichtung 1 drei voneinander unabhängige Signale, das lediglich vom Schwenkwinkel abhängige Schwenkwinkel-Messsignal, das lediglich von der Verwindung abhängige Verwindungs-Messsignat und ein lediglich vom Kippwinkel abhängiges Kippwinkel-Messsignal, umfassen.

In vorteilhafter Weise kann vorgesehen sein, dass die Messeinrichtung 1 zumindest einen Sensor 11 umfasst, welcher Sensor 11 zur Ermittelung des Messsignals vorgesehen ist. Das mittels des Sensors 11 ermittelte Messsignal liegt somit elektronisch vor und kann somit ein elektronisches Eingangssignal der Steuereinrichtung ausbilden. Insbesondere kann das Messsignal verstärkt werden und das verstärkte Signal kann das elektronische Eingangssignal der Steuereinrichtung ausbilden. In vorteilhafter Weiterbildung kann vorgesehen sein, dass die Steuereinrichtung elektronische Ausgangssignale in Abhängigkeit von den elektronischen Eingangssignalen ermittelt. Die elektronischen Ausgangssignale können wiederum die Stellung des Geberzylinders vorgeben, insbesondere regeln, und/oder können die Stellung des Stellmotors vorgeben, insbesondere regeln.

Der Sensors 11 kann derart ausgebildet sein, dass die Relativanordnung wenigstens zweier, vorbestimmt angeordneter Signalpunkte des Sensors 11 ermittelt wird, wobei wenigstens einer der wenigstens zwei Signalpunkte lagefest am Zugfahrzeug fixiert ist und wenigstens ein anderer der wenigstens zwei Signalpunkte lagefest am Fahrzeuganhänger, beispielsweise am Rahmen des Fahrzeuganhängers, fixiert ist, wobei die Messeinrichtung 1 sowohl am Zugfahrzeug als auch am Fahrzeuganhänger fixiert ist.

In anderer Ausbildung des Sensors 11 kann mittels Laser und/oder Schall die Relativanordnung des Fahrzeuganhängers, beispielsweise des Rahmens des Fahrzeuganhängers, zum beabstandeten Sensor 11 ermittelt werden, wozu der Sensor 11 lagefest am Zugfahrzeug fixiert ist, wobei die Messeinrichtung 1 lediglich am Zugfahrzeug fixiert ist.

Zur Ausbildung eines redundanten Messsystems kann zusätzlich zur Messeinrichtung 1 eine weitere Messeinrichtung 2 angeordnet sein. Vorteilhaft dabei ist, dass, wenn eine der beiden Messeinrichtungen 1, 2 ausfällt, von der anderen der beiden Messeinrichtungen 1, 2 weiterhin ein Messsignal ermittelbar und an den Eingang der Steuereinrichtung übergebbar ist, sodass die Zwangslenkung weiterhin funktionsfähig bleibt. Insbesondere kann dabei vorgesehen sein, dass bei einem Überschreiten einer vorgebbaren maximalen Abweichung der Messsignale, also des Messsignals der Messeinrichtung 1 vom Messsignal der weiteren Messeinrichtung 2, eine Fehlermeldung ausgegeben wird, sodass eine einfache Kontrolle der Funktionsfähigkeit der Zwangslenkung gewährleistet ist. Vorteilhaft dabei ist weiters, dass mittels der Messeinrichtung 1 und der weiteren Messeinrichtung 2-sofern nicht eine der beiden Messeinrichtungen 1, 2 ausgefallen ist - ein Messsignalmittelwert als Messsignal ausgegeben und an den Eingang der Steuereinrichtung übergeben werden kann, welches den statistischen Fehler senkt und derart die Messgenauigkeit erhöht. Hiezu werden beide Messeinrichtungen 1, 2 verwendet und der Mittelwert der beiden Messsignale in der Steuereinrichtung wird gebildet. In diesem Zusammenhang kann insbesondere vorgesehen sein, dass die Messeinrichtung 1 ein erstes Messsignal 1 ermittelt und die weitere Messeinrichtung 2 ein zweites Messsignal ermittelt.

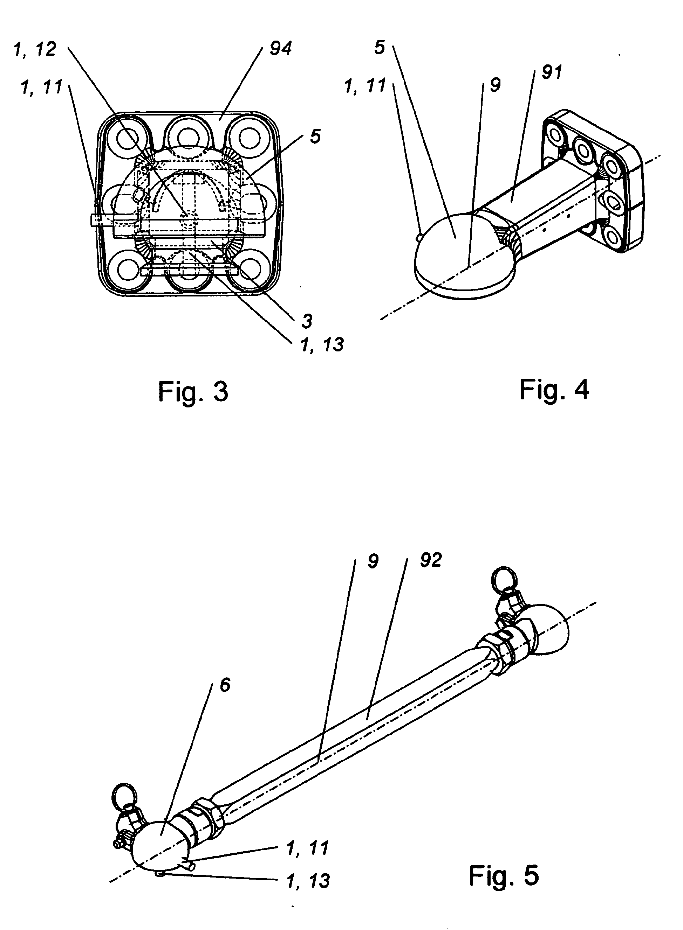

Die weitere Messeinrichtung 2 kann insbesondere äquivalent zur Messeinrichtung 1 ausgebildet sein. Insbesondere kann die weitere Messeinrichtung 2 ebenfalls wenigstens einen Sensor 11 zur Ermittelung eines elektronischen Signals umfassen. Insbesondere kann vorgesehen sein, dass die Messeinrichtung 1 im Wesentlichen in einer Last-Kupplungskugel 3 und/oder im Wesentlichen in einer Last-Kupplungspfanne 5 angeordnet ist, wie dies bei der ersten Ausführungsform der Zwangslenkung vorgesehen ist, wobei in der ersten Ausführungsform die Last-Kupplungskugel 3 und die Last-Kupplungspfanne 5 von der Zwangslenkung umfasst sind. In Betriebslage ist die Last-Kupplungskugel 3 am Zugfahrzeug montiert. In Betriebslage ist die Last-Kupplungspfanne 5 am Fahrzeuganhänger montiert. Die Last-Kupplungskugel 3 und die Last-Kupplungspfanne 5 sind zum Kuppeln miteinander vorgesehen, wobei über diese Kupplung die Anhängelast gezogen wird. Die miteinander gekuppelte Last-Kupplungskugel 3 und Last-Kupplungspfanne 5 sind schematisch in Fig. 1 und 3 dargestellt. In Weiterbildung der ersten Ausführungsform der Zwangslenkung kann somit vorgesehen sein, dass die Messeinrichtung 1 und/oder die weitere Messeinrichtung 2 im Wesentlichen in einer Last-Kupplungskugel 3 und/oder im Wesentlichen in einer Last-Kupplungspfanne 5 angeordnet sind.

In der zweiten Ausführungsform der Zwangslenkung ist vorgesehen, dass die Messeinrichtung 1 im Wesentlichen in einer zusätzlich zur Last-Kupplungskugel 3 angeordneten Zwangslenkungs-Kupplungskugel 4 und/oder im Wesentlichen in einer zusätzlich zur Last-Kupplungspfanne 5 angeordneten Zwangstenkungs-Kupplungspfanne 6 angeordnet ist, wobei in der zweiten Ausführungsform die Zwangslenkungs-Kupplungskugel 4 und die Zwangslenkungs-Kupplungspfanne 6 von der Zwangslenkung umfasst sind. In Betriebslage ist die Zwangstenkungs-Kupplungskugel 4 am Zugfahrzeug montiert. In Betriebslage ist die Zwangstenkungs-Kupplungspfanne 6 am Fahrzeuganhänger montiert. Die Zwangstenkungs-Kupplungskugel 4 und die Zwangstenkungs-Kupptungspfanne 6 sind ebenfalls zum Kuppeln miteinander vorgesehen, wobei über diese Kupplung im Wesentlichen keine Anhängelast gezogen wird. In Weiterbildung der zweiten Ausführungsform der Zwangslenkung kann insbesondere vorgesehen sein, dass die Messeinrichtung 1 und/oder die weitere Messeinrichtung 2 im Wesentlichen in der Zwangstenkungs-Kupplungskugel 4 und/oder im Wesentlichen in der Zwangslenkungs-Kupplungspfanne 6 angeordnet sind.

In der dritten Ausführungsform der Zwangslenkung ist vorgesehen, dass die Messeinrichtung 1 im Wesentlichen in der Last-Kupplungskugel 3 und/oder im Wesentlichen in der Last-Kupplungspfanne 5 angeordnet ist und dass die weitere Messeinrichtung 2 im Wesentlichen in der Zwangslenkungs-Kupplungskugel 4 und/oder im Wesentlichen in der Zwangstenkungs-Kupptungspfanne 6 angeordnet ist. In Weiterbildung der dritten Ausführungsform der Zwangslenkung kann insbesondere vorgesehen sein, dass die weitere Messeinrichtung 2 im Wesentlichen in der Last-Kupptungskuget 3 und/oder im Wesentlichen in der Last-Kupplungspfanne 5 angeordnet ist und dass die Messeinrichtung 1 im Wesentlichen in der Zwangstenkungs-Kupptungskuget 4 und/oder im Wesentlichen in der Zwangslenkungs-Kupplungspfanne 6 angeordnet ist. Vorteilhaft dabei ist, dass sowohl Schwenkwinkel und Verwindung im Bereich der Last-Kupplungskugel 3 als auch Schwenkwinkel und Verwindung im Bereich der Zwangslenkungs-Kupplungskugel 4 ermittelt werden, womit die besonders hohe Messgenauigkeit und die besonders hohe Messzuverlässigkeit des Schwenkwinkels und der Verwindung gewährleistet werden können.

Insbesondere kann die Messeinrichtung 1 zumindest drei Sensoren 11, 12, 13, den ersten Sensor 11, einen zweiten Sensor 12 und einen dritten Sensor 13, umfassen, wie dies bei der ersten und bei der zweiten Ausführungsform der Zwangslenkung vorgesehen ist. Insbesondere kann die weitere Messeinrichtung 2 ebenfalls zumindest drei Sensoren 11, 12, 13 umfassen, wie dies bei der dritten Ausführungsform der Zwangslenkung vorgesehen ist.

In besonders vorteilhafter Weiterbildung kann vorgesehen sein, dass die Messeinrichtung 1 die drei Sensoren 11, 12, 13 zur Ermittlung der Verdrehung um drei im Wesentlichen aufeinander senkrechte stehende Achsen umfasst. In diesen Zusammenhang kann vorgesehen sein, dass die drei Sensoren 11, 12, 13 zur Ermittlung der Verdrehung der Last-Kupplungspfanne 5 um die Last-Kupplungskugel 3 und/oder der Zwangslenkungs-Kupplungspfanne 6 um die Zwangstenkungs-Kupplungskugel 4 um drei im Wesentlichen aufeinander senkrechte stehende Achsen vorgesehen sind, wie dies gemäß der ersten und der zweiten Ausführungsform der Zwangslenkung vorgesehen ist. Derart kann die dreidimensionale Verdrehung der jeweiligen Kupplungspfanne um die jeweilige Kupplungskugel mit hoher Präzision und mit hoher Zuverlässigkeit ermittelt werden und aus dieser ermittelten dreidimensionalen Verdrehung können sowohl der Schwenkwinkel, der Kippwinkel und die Verwindung mit hoher Präzision und mit hoher Zuverlässigkeit abgeleitet werden.

In vorteilhafter Weise kann der erste Sensor 11 zur Ermittelung des Schwenkwinkels vorgesehen sein. In vorteilhafter Weise kann der zweite Sensor 12 zur Ermittelung des Kippwinkels vorgesehen sein. In vorteilhafter Weise kann der dritte Sensor 13 zur Ermittelung der Verwindung vorgesehen sein. Die drei Sensoren 11, 12, 13 ermitteln dabei die jeweiligen Winkelsignale unabhängig voneinander. Das Messsignal umfasst somit die jeweiligen Winkelsignale und die jeweiligen Winkelsignale können als drei Einzelsignale an den Eingang der Steuereinrichtung übergeben werden, wozu der Eingang der Steuereinrichtung drei Signaleingänge umfassen kann. Ebenfalls kann vorgesehen sein, dass die jeweiligen Winkelsignale zu einem gemeinsamen Messsignal zusammengefasst werden und dieses gemeinsame Messsignal kann an den Eingang der Steuereinrichtung übergeben werden, wozu der Eingang der Steuereinrichtung einen Signaleingang umfassen kann.

Gemäß der ersten Ausführungsform der Zwangslenkung ist vorgesehen, dass einer der drei Sensoren 11, 12, 13, insbesondere der dritte Sensor 13, der Messeinrichtung 1 in der Last-Kupplungskugel 3 angeordnet ist und dass zwei der drei Sensoren 11, 12, 13 in der Last-Kupplungspfanne 5 angeordnet sind. Hiebei ist die Messeinrichtung 1 im Wesentlichen in der Last-Kupplungskugel 3 und im Wesentlichen in der Last-Kupplungspfanne 5 angeordnet. Vorteilhaft dabei ist, dass die drei Sensoren 11, 12, 13 einfach, robust und kostengünstig ausbildbar sind, im Wesentlichen normal aufeinander stehen und dennoch lediglich geringen zusätzlichen Raumbedarf haben. In vorteilhafter Weiterbildung der ersten Ausführungsform kann vorgesehen sein, dass zwei der drei Sensoren 11, 12, 13 in der Last-Kupplungskugel 3 angeordnet sind und dass einer der drei Sensoren 11, 12, 13 in der Last-Kupplungspfanne 5 angeordnet ist.

In anderer vorteilhafter Weiterbildung kann vorgesehen sein, dass einer oder zwei der drei Sensoren 11, 12, 13, insbesondere der dritte Sensor 13, der weiteren Messeinrichtung 2 in der Zwangslenkungs-Kupplungskugel 4 angeordnet ist und dass der oder die anderen der drei Sensoren 11, 12, 13 in der Zwangslenkungs-Kupplungspfanne 6 angeordnet sind.

Die Last-Kupplungspfanne 5 kann von der Zugstange 91 umfasst, insbesondere einstückig mit der Zugstange 91 ausgebildet sein. Die Zugstange 91 kann mittels eines Flansches 94 an einem weiteren Fahrzeuganhängerteil 95 montiert sein. Der weitere Fahrzeuganhängerteil 95 kann insbesondere als weiterer Zugstangenteil ausgebildet sein, wie dies schematisch in Fig. 7 dargestellt ist.

Die Zwangslenkungs-Kupplungspfanne 6 kann von der Lenkstange 92 umfasst, insbesondere einstückig mit der Lenkstange 92 ausgebildet sein.

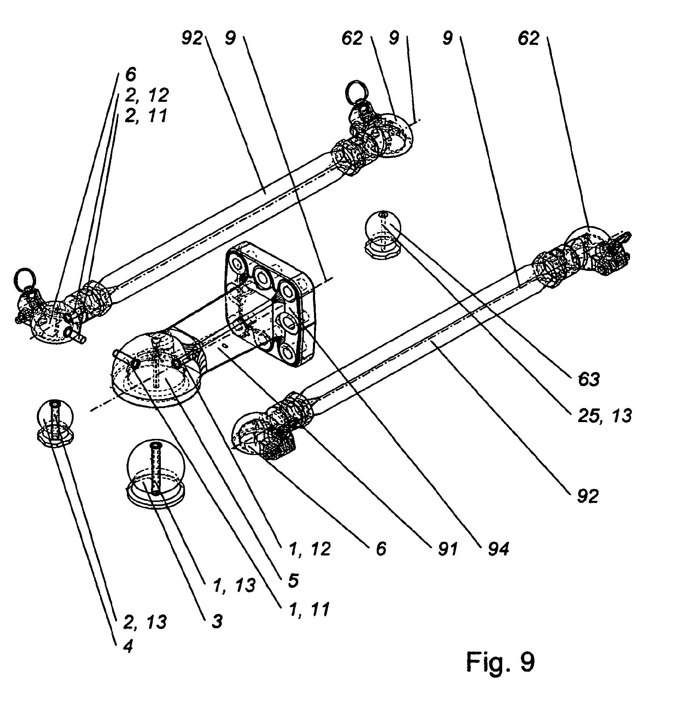

Fig. 9 zeigt Teile von einer vorteilhaften vierten Ausführungsform der Zwangslenkung. In der vierten Ausführungsform der Zwangslenkung umfasst die Zwangslenkung zwei Zwangslenkungs-Kupplungskugeln 4, von denen eine in Fig. 9 dargestellt ist, zwei Lenkstangen 92, die Last-Kupplungskugel 3, die Zugstange 91 und zwei zweite Zwangstenkungs-Kupptungskugeln 63, von denen eine in Fig. 9 dargestellt ist. Die Zugstange 91 umfasst die Last-Kupptungspfanne 5. Jede der Lenkstangen 92 umfasst an einem ersten Ende eine Zwangstenkungs-Kupplungspfanne 6 und an einem, dem ersten Ende gegenüberliegenden zweiten Ende eine zweite Kupplungspfanne 62. Die Zwangstenkungs-Kupptungspfanne 6 ist zur Anordnung angrenzend ans Zugfahrzeug vorgesehen. Die zweite Kupplungspfanne 62 ist zur Anordnung beabstandet zum Zugfahrzeug vorgesehen und zum Kuppeln mit einer der beiden zweiten Zwangslenkungs-Kupplungskugeln 63. In Betriebslage ist die zweite Zwangslenkungs-Kupplungskugel 63 am Fahrzeuganhänger montiert. Die jeweils zum Zusammenwirken vorgesehen Pfannen und Kugeln der Zwangslenkung sind in der Fig. 9 in Explosionsdarstellung entfernt voneinander dargestellt, wobei im gekuppelten Zustand die jeweils zum Zusammenwirken vorgesehen Pfannen und Kugeln der Zwangslenkung einander kontaktieren.

Gemäß der vierten Ausführungsform ist vorgesehen, dass die Zwangslenkung drei Messeinrichtungen, eine Messeinrichtung 1, eine weitere Messeinrichtung 2 und eine dritte Messeinrichtung 25 umfasst. Jeder dieser drei Messeinrichtungen 1, 2, 25 umfasst wenigstens einen der drei Sensoren 11, 12, 13.

Insbesondere kann vorgesehen sein, dass die Messeinrichtung 1 und die weitere Messeinrichtung 2 jeweils drei Sensoren 11, 12, 13, insbesondere einen Sensor 11, einen zweiten Sensor 12 und einen dritten Sensor 13, umfasst. Derart sind die Messeinrichtung 1 und die weitere Messeinrichtung 2 vollständig redundant ausgebildet. Hiebei kann vorgesehen sein, dass der dritte Sensor 13 der Messeinrichtung 1 in der Last-Kupplungskugel 3 und der erste Sensor 11 und der zweite Sensor 12 der Messeinrichtung 1 in der Last-Kupptungspfanne 5 angeordnet sind. Hiebei kann weiters vorgesehen sein, dass der dritte Sensor 13 der weiteren Messeinrichtung 2 in einer der Zwangslenkungs-Kupplungskugeln 4 und der erste Sensor 11 und der zweite Sensor 12 der weiteren Messeinrichtung 2 in einer der Zwangstenkungs-Kupptungspfannen 6 angeordnet sind.

Insbesondere kann vorgesehen sein, dass die dritte Messeinrichtung 25 den dritten Sensor 13, insbesondere lediglich den dritten Sensor 13, umfasst, wie dies ebenfalls in Fig. 9 dargestellt ist. Vorteilhaft dabei ist, dass derart Bodenunebenheiten bei der Ermittlung des Kippwinkels mitbestimmt und berücksichtigt werden können. Der von der dritten Messeinrichtung 25 umfasste dritte Sensor 13 kann insbesondere in der zweiten Zwangslenkungs-Kupplungskugel 63 angeordnet sein, wie dies in Fig. 9 schematisch dargestellt ist.

In Weiterbildung der dritten Messeinrichtung 25 kann vorgesehen sein, dass diese wenigstens einen zweiten Sensor 12 und einen dritten Sensor 13 umfasst. Vorteilhaft dabei ist, dass Bodenunebenheiten bei der Ermittlung des Kippwinkels und der Verwindung mitbestimmt und berücksichtigt werden können.

In einer Weiterbildung von der dritten Messeinrichtung 25 weiters umfasste Sensoren, insbesondere ein erster Sensor 11 und/oder ein zweiter Sensor 12, können insbesondere in der zweite Kupplungspfanne 62 angeordnet sein.

In vorteilhafterweise Weise können sämtliche Messeinrichtungen 1, 2, 25 beabstandet zum Zugfahrzeug angeordnet werden. So kann in - nicht dargestellter - anderer Ausgestaltung der Zwangslenkung vorgesehen sein, dass die Messeinrichtung 1 oder die weitere Messeinrichtung 2 im Bereich des zweiten Endes einer wenigstens einer Lenkstange 92 der Zwangslenkung angeordnet ist. So kann in - nicht dargestellter - weiterer anderer Ausgestaltung der Zwangslenkung vorgesehen sein, dass die Messeinrichtung 1 im Bereich des zweiten Endes der einen zweier Lenkstangen 92 der Zwangslenkung und die weitere Messeinrichtung 2 im Bereich des zweiten Endes der anderen der zwei Lenkstangen 92 angeordnet sind.

In Weiterbildung der Erfindung kann vorgesehen sein, dass die Zwangslenkung weiters wenigstens vier Messeinrichtungen umfasst, also wenigstens die Messeinrichtung 1, die weitere Messeinrichtung 2, die dritte Messeinrichtung 25, eine vierte Messeinrichtung, umfasst.

Bei einer bevorzugten Ausbildung der Zwangslenkung für die Lenkung eines an ein Zugfahrzeug gekuppelten Fahrzeuganhängers mit der Messeinrichtung 1 zur Ermittlung des Schwenkwinkels zwischen dem Zugfahrzeug und dem Fahrzeuganhänger, wobei die Steuereinrichtung eingangseitig mit der Messeinrichtung 1 verbunden ist und die Lenkeinrichtung zur Verdrehung der Räder zumindest einer gelenkten Achse des Fahrzeuganhängers ausgangsseitig mit der Steuereinrichtung verbundenen ist, ist vorgesehen, dass der Sensor 11 der Messeinrichtung 1 oder der dritte Sensor 13 der Messeinrichtung 1 zur Ermittlung der Verwindung zwischen dem Zugfahrzeug und dem Fahrzeuganhänger ausgebildet ist, und dass die Steuereinrichtung ausgebildet ist, um bei der Generierung eines Steuersignals den ermittelten Schwenkwinkel und die ermittelte Verwindung zu berücksichtigen.

Dabei wird bei dem Verfahren zum Zwangslenken eines an ein Zugfahrzeug gekuppelten Fahrzeuganhängers, wobei mit dem Sensor 11 der Messeinrichtung 1 der Schwenkwinkel zwischen dem Zugfahrzeug und dem Fahrzeuganhänger ermittelt wird, das Messsignal von der Messeinrichtung an den Eingang der Steuereinrichtung übergeben wird, in der Steuereinrichtung ein vom Messsignal abhängiges Steuersignal generiert und das Steuersignal der Lenkeinrichtung zur Verdrehung der Räder zumindest einer Achse des Fahrzeuganhängers übergeben. Weiters wird mit dem Sensor 11 oder mit dem dritten Sensor 13 der Messeinrichtung 1 weiters die Verwindung zwischen dem Zugfahrzeug und dem Fahrzeuganhänger ermittelt, und bei der Generierung des Steuersignals sowohl der ermittelte Schwenkwinkel als auch die ermittelte Verwindung berücksichtigt.

## Patentansprüche

1. Zwangslenkung für die Lenkung eines an ein Zugfahrzeug gekuppelten Fahrzeuganhängers mit einer Messeinrichtung (1) zur Ermittlung des Schwenkwinkels zwischen dem Zugfahrzeug und dem Fahrzeuganhänger, einer eingangseitig mit der Messeinrichtung (1) verbundenen Steuereinrichtung und einer ausgangsseitig mit der Steuereinrichtung verbundenen Lenkeinrichtung zur Verdrehung der Räder zumindest einer gelenkten Achse des Fahrzeuganhängers, **dadurch gekennzeichnet, dass** die Messeinrichtung (1) weiters zur Ermittlung der Verwindung zwischen dem Zugfahrzeug und dem Fahrzeuganhänger ausgebildet ist, und dass die Steuereinrichtung bei der Generierung eines Steuersignals sowohl den Schwenkwinkel als auch die Verwindung berücksichtigt.

2. Zwangslenkung nach Anspruch 1, **dadurch gekennzeichnet, dass** die Messeinrichtung (1) zumindest einen Sensor (11) umfasst.

3. Zwangslenkung nach Anspruch 1 oder 2, **dadurch gekennzeichnet, dass** die Steuereinrichtung elektronische Ausgangssignale in Abhängigkeit von elektronischen Eingangssignalen ermittelt.

4. Zwangslenkung nach Anspruch 1, 2 oder 3, **dadurch gekennzeichnet, dass** die Messeinrichtung (1) weiters zur Ermittlung des Kippwinkels zwischen dem Zugfahrzeug und dem Fahrzeuganhänger ausgebildet ist.

5. Zwangslenkung nach einem der Ansprüche 1 bis 4, **dadurch gekennzeichnet, dass** die Messeinrichtung (1) zumindest drei Sensoren (11, 12, 13) zur Ermittlung der Verdrehung um drei im Wesentlichen aufeinander senkrechte stehende Achsen umfasst.

6. Zwangslenkung nach einem der Ansprüche 1 bis 5, **dadurch gekennzeichnet, dass** zusätzlich zur Messeinrichtung (1) eine weitere Messeinrichtung (2) zur Ausbildung eines redundanten Systems angeordnet ist.

7. Zwangslenkung nach Anspruch 6, **dadurch gekennzeichnet, dass** die Messeinrichtung (1) und/oder die weitere Messeinrichtung (2) im Wesentlichen in einer Last-Kupplungskugel (3) und/oder im Wesentlichen in einer Last-Kupptungspfanne (5) angeordnet sind.

8. Zwangslenkung nach Anspruch 6, **dadurch gekennzeichnet, dass** die Messeinrichtung (1) und/oder die weitere Messeinrichtung (2) im Wesentlichen in einer zusätzlich zur Last-Kupplungskugel (3) angeordneten Zwangstenkungs-Kupplungskugel (4) und/oder im Wesentlichen in einer zusätzlich zur Last-Kupplungspfanne (5) angeordneten Zwangslenkungs-Kupplungspfanne (6) angeordnet sind.

9. Verfahren zum Zwangslenken eines an ein Zugfahrzeug gekuppelten Fahrzeuganhängers, wobei mit einer Messeinrichtung (1) der Schwenkwinkel zwischen dem Zugfahrzeug und dem Fahrzeuganhänger und weiters die Verwindung zwischen dem Zugfahrzeug und dem Fahrzeuganhänger ermittelt werden, ein Messsignal von der Messeinrichtung an einen Eingang einer Steuereinrichtung übergeben wird, in der Steuereinrichtung ein Steuersignal unter Berücksichtigung sowohl des Schwenkwinkels als auch der Verwindung generiert wird, und das Steuersignal einer Lenkeinrichtung zur Verdrehung der Räder zumindest einer Achse des Fahrzeuganhängers übergeben wird.

10. Verfahren nach Anspruch 9, **dadurch gekennzeichnet, dass** zwei Messeinrichtungen (1) verwendet werden und in der Steuereinrichtung der Mittelwert der Messsignale gebildet wird.

11. Verfahren nach Anspruch 10, **dadurch gekennzeichnet, dass** bei einem Überschreiten einer vorgebbaren maximalen Abweichung der Messsignale eine Fehlermeldung ausgegeben wird.

12. Verfahren nach Anspruch 9, 10 oder 11, **dadurch gekennzeichnet, dass** mit der Messeinrichtung (1) weiters der Kippwinkel zwischen dem Zugfahrzeug und dem Fahrzeuganhänger ermittelt wird.

## Claims

1. A forced steering system for steering a trailer coupled with a tractor vehicle, comprising a measuring device (1) for determining the pivoting angle between the tractor vehicle and the trailer, a control device connected on the input side with the measuring device (1), and a steering device connected on the output side with the control device for twisting the wheels of at least one steered axle of the trailer, **characterized in that** the measuring device (1) is further arranged for determining the twisting between the tractor vehicle and the trailer, and that the control device considers both the pivoting angle and also the twisting in generating the control sigrial.

2. A forced steering system according to claim 1, **characterized in that** the measuring device (1) comprises at least one sensor (11).

3. A forced steering system according to claim 1 or 2, **characterized in that** the control device determines electronic output signals depending on electronic input signals.

4. A forced steering system According to claim 1,2 or 3, **characterized in that** the measuring device (1) is further arranged for determining the tilting angle between the tractor vehicle and the trailer.

5. A forced steering system according to one of the claims 1 to 4, **characterized in that** the measuring device (1) comprises at least three sensors (11, 12, 13) for determining the twisting about three axes standing substantially perpendicularly with respect to each other.

6. A forced steering system according to one of the claims 1 to 5, **characterized in that** in addition to the measuring device (1) a further measuring device (2) is arranged for forming a redundant system.

7. A forced steering system according to claim 6, **characterized In that** the measuring device (1) and/or the further measuring device (2) are substantially arranged in a load hitch ball (3) and/or substantially in a load hitch socket (5).

8. A forced steering system according to claim 6, **characterized in that** the measuring device (1) and/or the further measuring device (2) are arranged substantially in a forced-steering hitch ball (4) provided in addition to the load hitch ball (3), and/or substantially in a forced-steering hitch socket (6) provided in addition to the load hitch socket (5).

9. A method for the forced steering of a trailer coupled with a tractor vehicle, wherein the pivoting angle between the tractor vehicle and the trailer and further the twisting between the tractor vehicle and the trailer are determined with a measuring device (1), a measuring signal is transmitted by the measuring device to an input of the control device, a control signal is generated in the control device by taking into account both the pivoting angle and also the twisting, and the control signal is transferred to a steering device for twisting the wheels of at least one axie of the trailer.

10. A method according to claim 9, **characterized in that** two measuring devices (1) are used and the mean value of the measuring signals is formed in the control device.

11. A method according to claim 10, **characterized in that** an error message is output upon exceeding a predeterminable maximum deviation of the measuring signals.

12. A method according to claim 9, 10 or 11, **characterized in that** the tilting angle between the tractor vehicle and the trailer is further determined with the measuring device (1).

## Revendications

1. Direction forcée pour la direction d'une remorque de véhicule accouplée à un véhicule tracteur avec un dispositif de mesure (1) pour déterminer l'angle de pivotement entre le véhicule tracteur et la remorque de véhicule, un dispositif de commande relié du côté de l'entrée au dispositif de mesure (1) et un dispositif de direction relié du côté de la sortie au dispositif de commande pour faire tourner les roues d'au moins un essieu dirigé de la remorque de véhicule, **caractérisée en ce que** le dispositif de mesure (1) est conçu en outre pour déterminer la torsion entre le véhicule tracteur et le remorque de véhicule et **en ce que** le dispositif de commande tient compte aussi bien de l'angle de pivotement que de la torsion pour générer un signal de commande.

2. Direction forcée selon la revendication 1, **caractérisée en ce que** le dispositif de mesure (1) comprend au moins un capteur (11).

3. Direction forcée selon la revendication 1 ou 2, **caractérisée en ce que** le dispositif de commande détermine des signaux de sortie électroniques en fonction de signaux d'entrée électroniques.

4. Direction forcée selon la revendication 1, 2 ou 3, **caractérisée en ce que** le dispositif de mesure (1) est en outre conçu pour déterminer l'angle de basculement entre le véhicule tracteur et la remorque de véhicule.

5. Direction forcée selon l'une des revendications 1 à 4, **caractérisée en ce que** le dispositif de mesure (1) comprend au moins trois capteurs (11, 12, 13) pour déterminer la rotation autour de trois axes sensiblement perpendiculaires les uns aux autres.

6. Direction forcée selon l'une des revendications 1 à 5, **caractérisée en ce qu'**il est prévu outre le dispositif de mesure (1) un autre dispositif de mesure (2) destiné à former un système redondant.

7. Direction forcée selon la revendication 6, **caractérisée en ce que** le dispositif de mesure (1) et/ou l'autre dispositif de mesure (2) sont disposés pour l'essentiel dans une boule d'attelage de charge (3) et/ou pour l'essentiel dans une tête d'attelage de charge (5).

8. Direction forcée selon la revendication 6, **caractérisée en ce que** le dispositif de mesure (1) et/ou l'autre dispositif de mesure (2) sont disposés pour l'essentiel dans une boule d'attelage de direction forcée (4) disposée en plus de la boule d'attelage de charge (3) et/ou pour l'essentiel dans une tête d'attelage de direction forcée (6) disposée en plus de la tête d'attelage de charge (5).

9. Procédé pour la direction forcée d'une remorque de véhicule accouplée à un véhicule tracteur, dans lequel l'angle de pivotement entre le véhicule tracteur et la remorque de véhicule et aussi la torsion entre le véhicule tracteur et la remorque de véhicule sont déterminés avec un dispositif de mesure (1), un signal de mesure est transmis du dispositif de mesure à une entrée d'un dispositif de commande, un signal de commande est généré dans le dispositif de commande en prenant en compte aussi bien l'angle de pivotement que la torsion, et le signal de commande est transmis à un dispositif de direction pour faire tourner les roues d'au moins un essieu de la remorque de véhicule.

10. Procédé selon la revendication 9, **caractérisé en ce que** deux dispositifs de mesure (1) sont utilisés et la moyenne des signaux de mesure est constituée dans le dispositif de commande.

11. Procédé selon la revendication 10, **caractérisé en ce qu'**un message d'erreur est émis lorsqu'un écart maximal pouvant être prédéterminé entre les signaux de mesure est dépassé.

12. Procédé selon la revendication 9, 10 ou 11, **caractérisé en ce que** le dispositif de mesure (1) déterminé en outre l'angle de basculement entre le véhicule tracteur et la remorque de véhicule.
